# EUROPEAN PATENT APPLICATION

(11) **EP 4 390 444 A1**
(43) Date of publication of application: **26.06.2024**
(21) Application number: 22214769.6
(22) Date of filing: 19.12.2022
(51) Int. Cl.: G01S 7/481

(54) **UNAMBIGUOUS LASER SCANNING DATA FROM SCANNING WITH TWO PULSE FREQUENCIES**

(71) Applicant: Hexagon Technology Center GmbH, 9435 Heerbrugg (CH)
(72) Inventor: STUTZ, Reto, CH-9434 Au (CH); ENGELER, Florian, 9403 Goldach (CH)
(74) Representative: Kaminski Harmann

(57) **Abstract**

An MTA scanner for providing a point cloud comprising 1.) a light pulse source for generating a first pulse train with a first repetition rate, such that first ambiguity distance is less than an envisaged measurement range, and a second pulse train with a second repetition rate, such that second repetition rate is a proper fraction of the first repetition rate, 2.) a transmission unit to transmit the first scanning pulses and the second scanning pulses to respective transmission directions, 3.) an acquisition unit to acquire first and second scanning pulses reflected from object points in the environment, and 4.) an evaluation unit to assign the acquisition events to the respective first and second transmission events, using an MTA disambiguation based on the first and second repetition rates.

## Description

### FIELD OF THE INVENTION

The present invention relates to a terrestrial scanning or profiling instrument, in particular a laser scanning or profiling instrument, comprising generation, transmission and detection units for a first and a second pulse train and a method for resolving the multiple time-around (MTA) ambiguity of the scanning data and a computer program product based on it.

### BACKGROUND OF THE INVENTION

To capture information on setting, in particular a surface of an object, in particular a building or a construction site, scanning methods are typically utilized. The setting is typically represented by a contiguous point cloud, in particular a point cloud with at least 100 points per millisteradian (msr), or with other words 10 points/m² at 100 m from the scanner. Generic scanning instruments scan the setting with a scanning beam, in particular a laser-beam. The point cloud representing the setting is generated by combining the measured distance information with an emission angle of the scanning beam. In case of a scanning instrument the emission angle is typically represented by a polar angle and an azimuth angle.

The capturing of the point cloud might also be carried out during a spatial movement of the measuring apparatus. The own movement of the measuring apparatus, respectively the movement of a mobile carrier, has to be acquired and merged with the scan data. Instruments configured for this task are often called profiling instrument. In case of a profiling instrument the emission angle is typically represented by a single rotation angle, wherein the rotation axis might be tilted in respect to the plane in which the carrier moves. By way of example scanning instruments represent a category of similar instruments, in particular including profiling instruments. By way of example laser based scanning instruments from here on represent generic scanning instruments. The specific features of other types of scanning or profiling instruments might be applied accordingly.

The distance information in contemporary scanning or profiling instruments, such as laser-scanners, profilers, rotating lasers, lidars, laser-tracker or geodetic survey instruments, is typically based on a time of flight measurement of the laser pulses. By way of example "individual pulses" represent the primitive pulse form, in particular a pulse with 100 ps to 3 ns pulse width, transmitted by the instrument. Scanning pulses might represent single individual pulses or sequences of individual pulses repeated periodically or quasi-periodically. Sequence of pulses wherein the individual pulses being shifted to each other with a regular, random or quasi-random jitter might also be considered scanning pulses for the present invention.

For the detection of the laser pulses there are many known approaches in the prior art. In the so-called threshold method a laser pulse is considered as detected when the intensity of the detected radiation exceeds a threshold. Another possibility is a precise sampling of the electric signal produced by the detector via an analog-to-digital converter (ADC).

Contemporary electronic components enable very high pulse repetition rates, however an increase of the pulse repetition rates gives rise to the so-called multiple-time-around (MTA), also called problem multiple-pulses-in-air (MPiA) problem. The MTA problem occurs when the pulse repetition frequency is so high that a time between transmitted scanning pulses is shorter than a time required for an echo to return to the sensor. In this case, a reflected pulse from a particular transmitted pulse may arrive at the detector only after a number of other intervening transmitted scanning pulses have been sent. The acquired pulse must be assigned to the original transmission time in question to enable a correct range measurement. The process of this assignment is often referred to as MTA or MPiA disambiguation and the assignment itself is often referred to as the acquired pulse's ambiguity, MTA, or MPiA zone. For example, if an acquired pulse is assigned to the transmitted pulse immediately preceding it, it is assigned to ambiguity zone zero, and an ambiguity zone of twenty indicates that there are twenty intervening transmitted scanning pulses.

Furthermore, given a pair of consecutive transmitted scanning pulses, the echo of the latter may nevertheless arrive at the acquisition unit before the former if it has been reflected off of a target that is closer to the detector by a wide enough margin to allow the previously transmitted pulse to arrive first. Thus, scanning pulses returning to the laser scanner may mix with one another, i.e. return with a different sequence than with which they were transmitted. This may be caused distance jumps, i.e. a distance change between a first object and a second object exceeding the ambiguity distance. Such distance jumps are typical by scanning e.g. in urban or forested areas, where the ambiguity zone may rapidly change as the scanning laser passes onto and off of walls of buildings or trees.

The prior art offers some solutions for the ambiguity resolution. E.g. from US 6,031,601 A it is known that for distance measurement a polychromatic or monochromatic light source is modulated by means of a pseudo-randomized number code generator. The light received from the target is decoded according to the coding and the distance is calculated from it. This solution has the disadvantage that the generated random noise coding sequences have a large duty cycle, i.e. a large ratio of pulse duration to period duration. This means that maximum repetition rate is not determined by the resolution of the pulse generation unit and/or the ADC but the length of the code.

Another drawback arises due to the length of the code itself and the fact that all returns from the same sequence will be assigned to the same ambiguity zone. Thus, especially in the case of distance jumps the method might be unable to resolve the unambiguity.

This approach has a further drawback that the computational complexity rises with the number of ambiguity zones that must be accommodated, in particular the MTA disambiguation have to be carried out for each scanning pulse. Furthermore, for more ambiguity zones more codes are required and the code sequences must also be longer to maintain a consistent signal to noise ratio.

### OBJECT OF THE INVENTION

In view of the above circumstances, the object of the present invention is to provide a more efficient unambiguity resolution method for a terrestrial scanning or profiling instrument. Further the unambiguity resolution method shall exhibit flexibility in the computational complexity, i.e. it shall perform sophisticated computing only when the unambiguity resolution requires it.

These objectives are achieved by realizing the characterizing features of the independent claims. Features, which further develop the invention in an alternative or advantageous manner are described in the dependent patent claims.

### SUMMARY OF THE INVENTION

The present invention relates to a terrestrial scanning or profiling MTA instrument configured to provide a point cloud representing an environment. The scanning or profiling instrument is configured to provide the point cloud by measuring a time of flight of an electromagnetic pulse, in particular a laser pulse, reflected from a plurality of object points in the environment. Object points according to the present invention are non-distinguished points a.) visible from the scanning or profiling instrument b.) laying on the surface of the objects comprised by the environment c.) forming a contiguous point cloud, in particular a point cloud with at least 100 point per msr density.

The scanning or profiling instrument comprises a light pulse source, a transmission unit, an acquisition unit, and an evaluation unit. By way of example from here on only scanning instruments are described in details, the specific features of profiling instruments might be applied accordingly.

The light pulse source is configured to generate a first pulse train. The first pulse train comprises first scanning pulses at a first repetition rate. A first ambiguity distance defined by the first repetition rate is less than an envisaged measurement range. The first ambiguity distance might be defined such as half of the distance a pulse travels between the emission of two first scanning pulses of the first pulse train, i.e. the echo of a first scanning pulse of the first pulse train reflected from an object at the first ambiguity distance from the instrument reaches the instrument at the time when the subsequent first scanning pulse of the first pulse train is transmitted. In some embodiments the light pulse source comprises a first laser diode and the first pulse train consists of laser pulses. By way of example from here on only scanning instruments based on laser scanning are described in detail. The specific features of other types of scanning instruments might be applied accordingly.

Pulse train in the sense of the present invention means the totality of the individual pulses emitted. The first pulse train is substantially periodic, i.e. it comprises a base sequence of one or more individual pulses which are repeated with a first repetition rate. From here on a transmitted base sequence of the first pulse train is called as a first scanning pulse. A first scanning pulse of the first pulse train might comprise a single individual pulse. A first scanning pulse of the first pulse train might comprise a plurality of individual pulses with different amplitudes. The first scanning pulses of the first pulse train might be adjusted during the scanning process, in particular the amplitude of the individual pulses might be adjusted with respect to the reflectivity of the environment. From here on, unless otherwise specified, the first scanning pulses of the first pulse train are considered to be single individual pulses with a constant pulse shape. The specific features of complex first scanning pulses, in particular first scanning pulses having a sequence of individual pulses, might be applied accordingly.

The first repetition rate according to the present invention means the average number of first scanning pulses of the first pulse train emitted per unit of time. The first repetition rate might be considered to be frequency for strictly periodic first pulse trains. The first pulse train might show a slight variation, in particular a jitter, the first repetition rate can be regarded as a base frequency for such first pulse trains. By way of example, unless otherwise specified, the first pulse train is considered to be strictly periodic. The specific features of other types of first pulse trains, in particular first pulse trains with a jitter, might be applied accordingly. The first repetition rate might be at least 500 kHz, in particular 1 MHz or higher.

The light pulse source is further configured to generate a second pulse train. The second pulse train comprises second scanning pulses at a second repetition rate. The second pulse train is substantially similar to the first pulse train, and unless otherwise provided, the features of the first pulse train can be applied accordingly. The second scanning pulses of the second pulse train might have identical pulse characteristics to the first scanning pulses of the first pulse train.

The second scanning pulses of the second pulse train might be distinguishable from the first scanning pulses of the first pulse train, in particular by different wavelength and/or spectrum, different pulse energy, different pulse shape/width, or different pulse pattern. Even though this is an especially advantageous utilization of the present invention, the present invention can be applied to cases where the first scanning pulses of the first pulse train and second scanning pulses of the second pulse train are indistinguishable as isolated pulses. The second pulse train as an ensemble is distinguishable from the first pulse train due to the difference in the second and first repetition rates.

The first and the second pulse trains might be generated by two similar, but essentially separate systems, e.g. separate laser diodes and drives. This approach is especially beneficial, since it allows the utilization of two laser diodes with different laser wavelength, thus the first and second pulses might be distinguishable from each other. The present invention can be equally applied to instruments wherein the light pulse source utilizes a single system, two systems with partially shared components or two separate systems for generating the first and the second pulse trains.

For a scanning or profiling instrument according to the present invention the second repetition rate is a proper fraction (e.g. 2:3, 3:5) of the first repetition rate and each second scanning pulse of the second pulse train are separated by finite time intervals from each first scanning pulse of the first pulse train. The second repetition rate might be a unit fraction of the first repetition rate, e.g. the second repetition rate might be 500 kHz for a first repetition rate of 2 MHz. Such embodiments are advantageous as the time interval between the second scanning pulses of the second pulse train and the respective first scanning pulses of the first pulse train is essentially the same. This allows an identification of the echo of second scanning pulses of the second pulse train e.g. by pattern recognition, in particular by correlating the acquisition sequence with the emission sequence. The present invention is, however, not limited to these cases and it might also be applied for any proper fraction e.g. when the second repetition rate is 1.75 MHz for a first repetition rate of 2 MHz. Embodiments wherein the ratio of the second and first repetition rates are close to 1, in particular 5:6 or more, are advantageous as each first scanning pulse of the first pulse train has one or two nearest second scanning pulses of the second pulse train, which are separated by a time interval less than the time interval between two subsequent first scanning pulses of the first pulse train. The generation of the first and the second pulse trains is continuous, in particular the scanning is carried out in a single scanning mode.

The transmission unit is configured to transmit the first scanning pulses of the first pulse train and the second scanning pulses of the second pulse train along respective transmission directions. The transmission direction might be characterized by the respective polar and azimuth angles at the transmission of the pulses or a similar alternative. The transmission unit comprises a beam deflection element for varying the transmission direction at least by a rotation around a rotation axis. The beam deflection element might be a rotating mirror, in particular a fast rotating mirror with at least 1000 rotation per minute (rpm) rotation speed, the rotation axis might be a horizontal tilting axis. The transmission unit might provide further rotational degrees of freedom, in particular around a vertical bearing axis. Alternatively, further components of the scanning or profiling instrument, in particular a support unit, might provide further rotational degrees of freedom. The scanning or profiling instrument might be mounted on a mobile carrier providing translational degrees of freedom.

The transmission unit comprises angle sensors for providing data regarding the respective transmission directions of the transmitted first and second pulses. Said angle sensors provide in particular data on the state of the beam deflecting element. Instead of the raw measurement data pre-processed data, in particular calibrated angle data, might be provided by the angle sensors.

The transmission unit comprises elements, in particular in the form of an opto-electronic counter, to provide respective transmission times of the transmitted first and second pulses. The transmission times might be provided utilizing a trigger generated by the light pulse source. Alternatively, the transmission unit might comprise a separate optical path for providing a measurement for the transmission times. The present invention is not limited to any given means of providing the transmission times.

The acquisition unit is configured to acquire first scanning pulses of the first pulse train and second scanning pulses of the second pulse train reflected from object points in the environment. For each acquisition event an acquisition time is assigned. The object points representing the environment, in particular the density of the object points is above a threshold, in particular 100 points per msr. Reflection in the sense of the present invention means single, direct reflection of the scanning pulses. Object points might be reflecting mirror like or diffusely.

The acquisition unit might be angle resolved. The acquisition units might comprise decoding elements, such decoding elements might analyze the shape of the acquired first scanning pulses of the first pulse train and provide an acquisition time based on the analysis, in particular fitting. Furthermore, the acquisition unit might distinguish the echoes of the first scanning pulses of the first pulse train and second scanning pulses of the second pulse train e.g. based on the pulse shape. While embodiments wherein the acquisition of the echoes of the first scanning pulses of the first pulse train and second scanning pulses of the second pulse train are distinguished are advantageous, the present invention might be applied to cases where such distinction is not possible and/or not performed.

The evaluation unit is configured to 1.) assign to each first and second transmission event the respective transmission directions and times, 2.) assign the acquisition events to the respective first and second transmission events, based on a MTA disambiguation utilizing the first and second repetition rates of the first and second pulse trains, 3.) derive coordinates of the object points based on the assignment of the acquisition events to the respective first and second transmission events, 4.) provide the point cloud representing the environment based on the determined coordinates of the object points. The MTA disambiguation might assign the acquisition events utilizing the time interval of the acquired echoes, in particular wherein the first scanning pulses of the first pulse train and second scanning pulses of the second pulse train are distinguishable based on the pulse characteristics of the isolated scanning pulses. Said evaluation step might be carried out at a later time, in particular off-line. It is clear to the skilled artisan, that the numbering of the steps should not be read as instruction for a sequential execution of the steps, but as a listing to improve the readability.

In some embodiments the scanning instrument is configured to be mounted rotatably on a base unit. The base unit is configured to provide bearing rotation for the transmission directions of the transmitted first and second scanning pulses. In some alternative embodiments the base unit is configured to provide an oscillating motion for the bearing angle. The base unit might be a tripod stand. The base unit might comprise a compass and a spirit level or equivalent alignment aids. The rotation movement is preferably realized by a motorized axis. Manual rotation around the bearing rotation axis may also be possible under certain circumstances. Bearing in the sense of the present invention is a relative, instrument-intern horizontal angle to an arbitrary direction. In some embodiments the instrument is calibrated to a given direction, e.g. the true north, and bearing might also be an absolute horizontal angle relative to the given direction.

In some embodiments the transmission unit comprises a rotatable mirror. The rotatable mirror provides a tilting angle rotation the transmission directions of the transmitted first and second scanning pulses. In some alternative embodiments the mirror is configured to provide an oscillating motion for the tilting angle. The mirror might be a parabolic mirror. The scanning instrument might be configured to carry out a scanning process by rotating the transmission directions of the transmitted first and second scanning pulses. The axis of the tilting angle rotation might be calibrated to the true horizon and the tilting angle might be a calibrated elevation or inclination angle.

In some embodiments rotating the transmission directions of the transmitted first and second scanning pulses carried out continuously, with a constant bearing angle rotation speed and a constant tilting angle rotation speed. In some embodiments the bearing angle rotation speed is orders of magnitude lower than the tilting angle rotation speed. The bearing and tilting angle rotation speeds might be chosen to provide an isotropic scanning pattern, e.g. for a point density of 10 points/degree and a tilting angle rotation of 5400 rpm a respective bearing angle rotation is 1.5 rpm.

In some embodiments the profiling instrument is configured to be mounted on a movable carrier, in particular a car, an unmanned vehicle, a rail vehicle, or a man-portable carrier, in order to guide the profiling instrument along a path. Alternatively, the profiling instrument is configured to be mounted rotatably on a support unit, wherein the support unit is mounted on the mobile carrier. The transmission unit might comprise a rotatable mirror to provide a tilting angle rotation for the transmission directions of the transmitted first and second scanning pulses. Tilting angle rotation in case of a profiling instrument might be a rotation in a plane which is not perpendicular to the horizon. In some alternative embodiments the mirror is configured to provide an oscillating motion for the tilting angle. The transmission unit might comprise a fast rotating mirror configured to provide a tilting angle rotation speed of 5000 rpm or more.

The profiling instrument is configured to carry out a scanning process by rotating the transmission directions of the transmitted first and second scanning pulses with a constant rotation speed and steering the movable carrier along a path, wherein the pose of the mobile carrier is measured or derived. Alternatively, the profiling instrument is configured to carry out a scanning process during the movement of the mobile carrier, wherein the mobile carrier is steered independently of the profiler. The pose of the mobile carrier shall also be provided, in particular to the profiling instrument, and the pose of mobile carrier might be merged with data from the profiling instrument.

In some embodiments an energy and/or a width of the individual pulses in the second pulse train exceeds an energy and/or a width of the individual pulses in the first pulse train. In some specific embodiments the first pulse train is a periodic pulse train, and the second pulse train is a periodic pulse train. These embodiments are especially advantageous as the first and the second scanning pulses are distinguishable by the pulse energy and/or pulse width. Thus, the assignment of the acquisition times to the respective transmission times might be further based on the pulse energy and/or width information. The present invention can, however, be applied when the first and the second scanning pulses are indistinguishable as isolated pulses.

In some embodiments the light pulse source comprises a modulation unit configured to generate scanning pulse shift signal, e.g. a jitter signal. At least one of the first pulse train and the second pulse train might be non-periodic, and the respective transmission events are shifted by the generated pulse shift signal. In case of a single pulse train such a jittering is a well-known technique to provide further verification means on the MTA disambiguation. While the present invention can be utilized without any further aiding feature such as pulse jitter, nevertheless it might be beneficial to combine the features of further disambiguation means.

Both the first and second pulse trains might be jittered. Thus a higher variation of time intervals between the first scanning pulses of the first pulse train and the second scanning pulses of the second pulse train might be achieved. In these embodiments such simple, and low computation demand pulse jittering might contribute to an efficient MTA disambiguation.

In some embodiments the first pulse train comprises laser pulses with a first laser wavelength, and the second pulse train comprises laser pulses with a second laser wavelength. The second laser wavelength is different from the first wavelength. Due to the different wavelengths the interaction of the first and the second scanning pulses and possible misidentification events are minimized. Furthermore, due to the unambiguous distinction of the first and the second scanning pulses, an overlap between the first and the second scanning pulses might have no adverse effects.

In some embodiments at least one of the first scanning pulses of the first pulse train and the second scanning pulses of the second pulse train comprise a plurality of individual pulses. A sequence of individual pulses for the first scanning pulses of the first pulse train and second scanning pulses of the second pulse train might be non-equal. The first scanning pulses might comprise a plurality of individual pulses e.g. to increase the dynamic range of the instrument, while the second scanning pulses might comprise a single individual pulse. The first scanning pulses might comprise a plurality of individual pulses to identify the acquisition events with unambiguity problems. In some embodiments the first scanning pulses comprise a plurality of individual pulses while second laser wavelength differs from the first wavelength.

In some embodiments second repetition rate is less or equal to a half of the first repetition rate, in particular a unit fraction of the first repetition rate. These embodiments are especially beneficial in combination with periodic first and second pulse trains, since the time interval between the second scanning pulses of the second pulse train and the preceding and/or subsequent first scanning pulses of the first pulse train is always the same, which aids in the identification of the acquired second scanning pulses of the second pulse train.

In some embodiments the second scanning pulses of the second pulse train provide anchor points for the first scanning pulses of the first pulse train. Anchor points for the present invention means that a second ambiguity distance defined by the second repetition rate is more than the envisaged measurement range, or with alternative wording the distance of the anchor points to the scanning instrument can be determined without ambiguity. For anchor points the MTA disambiguation comprises 1.) identifying acquired second scanning pulses of the second pulse train reflected from anchor points in the environment, in particular by identifying double-pulses, 2.) determining the distance of the anchor points to the scanning or profiling instrument based on time of flights of the identified second scanning pulses of the second pulse train, 3.) providing an ambiguity zone assessment for the first scanning pulses of the first pulse train based on the determined distance of the anchor point to the scanning or profiling instrument, 4.) assigning the acquired first scanning pulses of the first pulse train reflected from object points in the environment to the first transmission events based on the ambiguity zone assessment. The second repetition rate might be a unit fraction of the first repetition rate when anchor points are utilized.

In some specific embodiments the second repetition rate is a unit fraction of the first repetition rate and the second scanning pulses of the second pulse train are identified by a pattern recognition algorithm, in particular by identifying double or triple pulses. In some even more specific embodiments the time interval between the second scanning pulses of the second pulse train and the precedent first scanning pulses of the first pulse train is less than half of the time interval between two subsequent first scanning pulses of the first pulse train. These embodiments are especially beneficial for identifying the second scanning pulses, i.e. the anchor points. As a further advantage an identified double pulse also means that the precedent first scanning pulse is also reflected from the same ambiguity zone, whereas an identified triple pulse means that both the precedent and subsequent first scanning pulses are reflected from the same ambiguity zone.

In some specific embodiments the second scanning pulses are distinguishable from the first scanning pulses by different wavelengths and/or different pulse energies and/or different pulse widths. The second scanning pulses of the second pulse train in these embodiments are further identified by the distinguishing characteristic.

The present invention also relates to a method MTA disambiguation for a terrestrial scanning or profiling instrument. The method comprises the steps of 1.) continuously transmitting a first pulse train comprising first scanning pulses at a first repetition rate, wherein a first ambiguity distance defined by the first repetition rate is less than an envisaged measurement range, 2.) continuously transmitting a second pulse train comprising second scanning pulses at a second repetition rate, wherein the second repetition rate is a proper fraction of the first repetition rate and each second scanning pulse of the second pulse train is separated by finite time intervals from each first scanning pulse of the first pulse train, 3.) assigning to each first and second transmission event respective transmission directions and times, 4.) acquiring first scanning pulses of the first pulse train and second scanning pulses of the second pulse train reflected from object points in the environment, 5.) assigning for each acquisition event an acquisition time, 6.) assigning the acquisition events to the respective first and second transmission events, based on a MTA disambiguation utilizing the first and second repetition rates of the first and second pulse trains.

In some embodiments of the method the second scanning pulses of the second pulse train are distinguishable from the first scanning pulses of the first pulse train, in particular by a different laser wavelength, by pulse energy and/or, and/or pulse width, and/or pulse amplitude, and/or pulse shape, and/or pulse pattern. The method further comprises 1.) dividing acquisition events into first acquisition events and second acquisition events, wherein first acquisition events relate to acquiring first scanning pulses of the first pulse train and second acquisition events relate to acquiring second scanning pulses of the second pulse train, 2.) assigning for each first acquisition event a first acquisition time and for each second acquisition event a second acquisition time 3.) assigning the first acquisition events to the respective first transmission events and the second acquisition events to the respective second transmission events based on a MTA disambiguation, wherein the MTA disambiguation comprises the recognition of the finite time intervals between the first and second transmission events in the time intervals of the first and second acquisition events.

In some embodiments of the method a second ambiguity distance defined by the second repetition rate is more than the envisaged measurement range. The MTA disambiguation comprises 1.) identifying an acquired second scanning pulse of the second pulse train, 2.) determining a distance of an anchor point to the scanning or profiling instrument based on the time of flight of the identified second scanning pulse of the second pulse train, 3.) providing an ambiguity zone assessment for the first scanning pulses of the first pulse train based on the determined anchor point to the scanning or profiling instrument distance.

In some embodiments the second repetition rate is a unit fraction of the first repetition rate. An envisaged time interval between the second transmission events from the preceding first transmission events is less than one half, in particular one quarter, of the time interval between two subsequent first transmission events, wherein the envisaged time interval is a constant time interval or a modulated time interval comprising a jitter term, between two transmission events. The method further comprises the steps of i.) identifying the second scanning pulses by a pattern recognition algorithm, in particular by identifying the envisaged time interval between two acquisition events, ii.) assigning the preceding first scanning pulses of the first pulse train to the ambiguity zone defined by the distance of the anchor point to the scanning or profiling instrument. The succeeding first scanning pulses of the first pulse train might also be assigned to ambiguity zone defined by the distance of the anchor point to the scanning or profiling instrument.

In some embodiments a tolerance range is defined based on the time interval of a second transmission event and a subsequent first transmission event. The MTA disambiguation further comprises the step of assigning the subsequent first scanning pulses of the first pulse train to the ambiguity zone defined by the distance of the anchor point to the scanning or profiling instrument, when a first scanning pulses is acquired with a time interval from the acquisition of the second scanning pulse falling into the tolerance range.

In some embodiments of the method all first scanning pulses of the first pulse train acquired between the acquisition of two subsequent second scanning pulses of the second pulse train defining the same ambiguity zone assigned to the said ambiguity zone.

In some embodiments the method further comprises the steps of 1.) defining for a given first transmission event a respective proximity angular range, wherein the proximity angular range a.) is compact, in particular conical or pyramidal, b.) comprises a respective object point relating to the given first transmission event, and c.) comprises a plurality of anchor points; 2.) providing a distance estimate for each of the one or more first transmission events on the basis of the distances of the anchor points to the scanning instrument within the proximity angular range, in particular wherein a range of the respective distances is smaller than a first ambiguity distance; and 3.) providing an assessment on a plausibility of the MTA assignment on the basis of the ambiguity zone assessment and the distance estimate of the respective first scanning pulse, in particular wherein the distance estimate is out of the assessed ambiguity zone.

In some specific embodiments the proximity angular range comprises anchor points with different azimuthal angles, or with other wording the comprises anchor points from different scan lines. The proximity angular range might be a circular cone or a quadratic pyramid with the scanning instrument at the apex and the object point relating to the given first transmission event might be on the main axis of the circular cone or quadratic pyramid. Such embodiments are especially beneficial for identifying outliers or other artifacts in a post processing. Alternative geometries, in particular wherein the object point relating to the given first transmission event is located at the edge of the proximity angular range, might be applied for displaying the scanning data on the flight.

In some specific embodiments the proximity angular range is substantially linear, i.e. it comprises anchor points with similar azimuthal angles.

In some specific embodiments the range estimate is provided further on the basis of the coordinates of the assigned object points within the proximity angular range.

In some specific embodiments the MTA disambiguation is performed on the basis of the distance estimate, in particular wherein the variance of the distance estimate as a function of the shape and/or extent of the proximity angular range is at least an order of magnitude lower than the first ambiguity distance; and/or the range of the distances of the anchor points is an order of magnitude lower than the first ambiguity distance.

In some embodiments the method further comprises deriving coordinates of the object points based on the assignment of the acquisition events to the respective first and second transmission events. The MTA disambiguation, in particular the ambiguity zone assessment, further based on the density of point cloud object points in the point cloud. Alternatively the assignment might minimize number of outliers, in particular wherein the outliers are anchor points. Such assignment is based on the correct assignment of the anchor points, since the second ambiguity distance exceeds the distance of the anchor points from the scanning instrument. The assignment is based on the fact that a mis-assignment causes at least for two object points at least a first ambiguity distance error.

The invention further relates to a computer program product for a scanning or profiling system which, when executed by a computer, in particular an evaluation unit of a scanning or profiling instrument, causes the automatic execution of the computation steps of a selected embodiment of the MTA disambiguation method.

### BRIEF DESCRIPTION OF THE DRAWINGS

By way of example only, specific embodiments of the invention will be described more fully hereinafter with reference to the accompanying figures, wherein:
Figure 1a shows a schematic embodiment of a scanning instrument.
Figure 1b shows a schematic embodiment of a scanning instrument wherein the light pulse source comprises two laser diodes.
Figure 1c shows a profiler with tilting axis rotation mounted on a mobile carrier.
Figure 1d shows the schematics of a profiler with bearing axis rotation mounted on a mobile carrier.
Figure 2a shows an environment with multiple ambiguity zones and the prior art scanning method.
Figure 2b shows a timeline of transmission and acquisition events with a hypothetical correct assignment.
Figure 2c shows an assignment of transmission and acquisition events according to the prior art based on an acquisition sequence.
Figure 2d shows estimated positions of object points based on a sequential assignment according to the prior art.
Figure 2e shows an assignment wherein ambiguity zones are falsely estimated, e.g. due to a falsely detected acquisition event.
Figure 2f shows estimated positions of object points based on the assignment of Figure 2e.
Figure 3 shows a first and second pulse train according to the present invention, wherein the second scanning pulses provide anchor points.
Figure 4a shows a scanning procedure according to an embodiment of the present invention based on anchor points.
Figure 4b shows transmission and acquisition events according to an embodiment of the present invention based on anchor points.
Figure 4c shows anchor points of a point cloud.
Figure 4d shows an assignment of first scanning pulses, wherein the anchor points indicate no ambiguity zone change.
Figure 4e shows a point cloud extended with the events assigned in Figure 4d.
Figure 4f shows an assignment of the first scanning pulses subsequent to anchor points based on a tolerance range of acquisition events.
Figure 5a shows distinguishable first and second pulse trains, wherein the ratio of the first and second repetition rates is 6:5.
Figure 5b shows undistinguishable first and second pulse trains, wherein the ratio of the first and second repetition rates is 6:5.
Figure 6a shows a scanning procedure according to the present invention with no ambiguity zone change.
Figure 6b shows a timeline of first and second transmission and acquisition events with a correct assignment based on a sequence of events.
Figure 6c shows an assignment wherein ambiguity zones are falsely estimated, e.g. due to a falsely detected acquisition event.
Figure 6d shows estimated positions of object points based on the assignment of Figure 6c.

### SPECIFIC EMBODIMENTS OF THE INVENTION

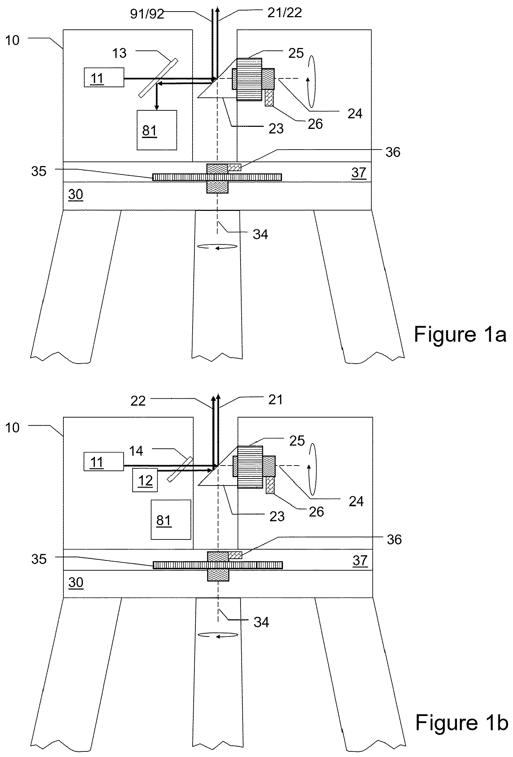

Figure 1a shows a schematic embodiment of a scanning instrument **10.** The light pulse source comprises a laser source **11,** configured to emit the first and second pulse trains. The first scanning pulses of the first pulse train and second scanning pulses of the second pulse train are emitted along the essentially same optical path. In the depicted embodiment a transmission unit comprises a rotating mirror **23,** which can be rotated around a tilting axis **24** by a motor **25.** The scanning instrument **10** is mounted by a support unit **37** to a base **30** such that it is rotatable around a bearing axis **34** by a motor **35.** The scanning instrument comprises a bearing angle sensor **36** configured to provide a bearing angle reading. Alternatively, the base **30** might comprise the bearing angle sensor **36.** The scanning instrument comprises a tilting angle sensor **26** configured to provide a tilting angle reading. The transmission directions of the respective first **21** and second scanning pulses **22** are determined based on the respective the sensor readings. Reflected first and second scanning pulses coming from directions **91/92** of object points are first redirected by the rotating mirror **23** towards the internal volume of the scanning instrument **10.** Then the semitransparent mirror **13** redirects the return pulses towards the acquisition unit **81.** Instead of a semitransparent mirror **13** a mirror with a specific transmission zone and a specific reflection zone might also be utilized, in particular a mirror with a hole as transmission zone. Alternative embodiments, in particular wherein the acquisition unit **81** is located or partly located at the outer surface of the scanning instrument **10,** might also be possible within the meaning of the present invention.

Figure 1b shows a schematic embodiment of the scanning instrument **10** wherein the light pulse source comprises separate first **11** and second laser sources **12.** The first **11** and second laser sources **12** might have a common casing defining a common optical path. The depicted rotating mirror **23** is a common component for both the first **11** and second laser sources **12.** The applicability of the present invention is not limited to a specific design of the light pulse source. The in Figure 1b depicted embodiment is especially advantageous as it allows the utilization of two separate laser sources with different laser wavelength. The acquisition unit **81** and the beam combiner/beam splitter **14** in Figure 1b, is analogous to the respective elements of the embodiment shown in Figure 1a. The application of separate acquisition units or further separate component for the two laser sources **11,12** is also possible.

Scanning instruments **10** comprising rotating mirrors **23** and rotatably mounted on a base **30** by a support unit **37** are well-known and widely applied arrangements. The present invention is however not limited to such embodiments. On the contrary, the present invention can be applied with any setup providing the required degrees of freedom of the transmission directions **21,22.** The present invention is neither limited to the use of a common beam deflecting element for transmitting the first and second scanning pulses. The present invention is not limited to first and second laser beam essentially consisting a single ray transmitted along a single transmission direction **21,22.** On the contrary, the present invention might also be applied to multibeam scanning instruments generating a plurality of first and/or second scanning pulses simultaneously and transmitting them along a plurality of transmission directions **21,22.**

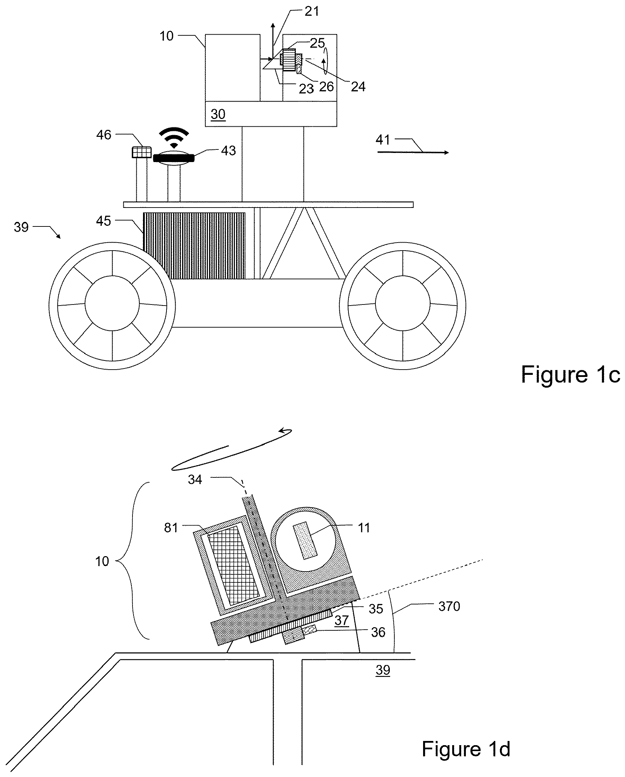

Figure 1c shows a schematic profiling instrument **10** mounted on a mobile carrier **39** depicted as a rail trolley. Such profiling instruments are often used to acquire point cloud data along a linearly navigable track, e.g. a tunnel. The depicted rail trolley **39** comprises an engine **45** to propel the profiling instrument along a path **41,** a retroreflector **46** to provide a pose of the trolley **39** in combination with a tracking instrument (not shown), and a communication unit **43** e.g. for remotely controlling the trolley **39** and/or the profiling instrument **10.** It is clear for the skilled person that the present invention is applicable with alternative embodiments. E.g. the communication unit **43** might be comprised by the profiler instrument **10,** the profiler **10** and/or a further computing unit might provide the guidance along the path **41,** instead of a passive retroreflector the pose of the trolley and/or the profiling instrument might be provided by an active pose determination unit, in particular a GNSS and/or wireless navigation system and/or an inertial navigation system.

The depicted profiler **10** is substantially similar to the scanning instruments of Figure 1a and 1b, however the transmission direction **21** of the beam can only be rotated along a tilting axis **24** by a motorized **25** rotating mirror **23.** The profiling instrument comprises a tilting angle sensor **26** configured to provide a tilting angle reading. The transmission directions of the first **21** and second scanning pulses are determined based on the respective the sensor readings. The tilting axis **24** in the depicted embodiment is horizontal, however the present invention is applicable with any orientation of the tilting axis **24.** The base **30** might provide pose adjustment options.

Figure 1d shows a profiling instrument **10** mounted on a mobile carrier **39,** in particular a car by a support unit **37.** The support unit **37** is rotatable around a bearing axis **34** by a motor **35** and comprise an angle sensor **36** configured to provide a bearing angle reading. The profiling instrument **10** is mounted such that its bearing axis **34** has a given angle **370** to the horizon. Said angle **370** might be adjustable. The in Figure 1d depicted embodiment comprise an extended first laser source **11.** In some embodiments of the profiler **10** the transmission unit (not shown here) of the first laser source **11** might be configured to provide a multibeam scanning. The depicted embodiment comprise an area detector in the acquisition unit **81,** such detectors might be angle resolved.

The features of the here depicted embodiments are combinable with each other or with similar or alternative embodiments of the state of the art.

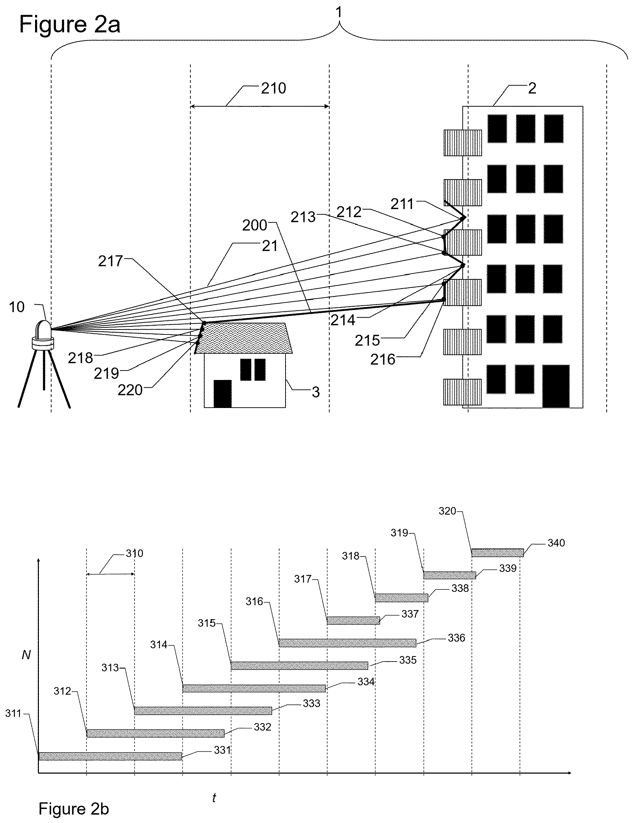

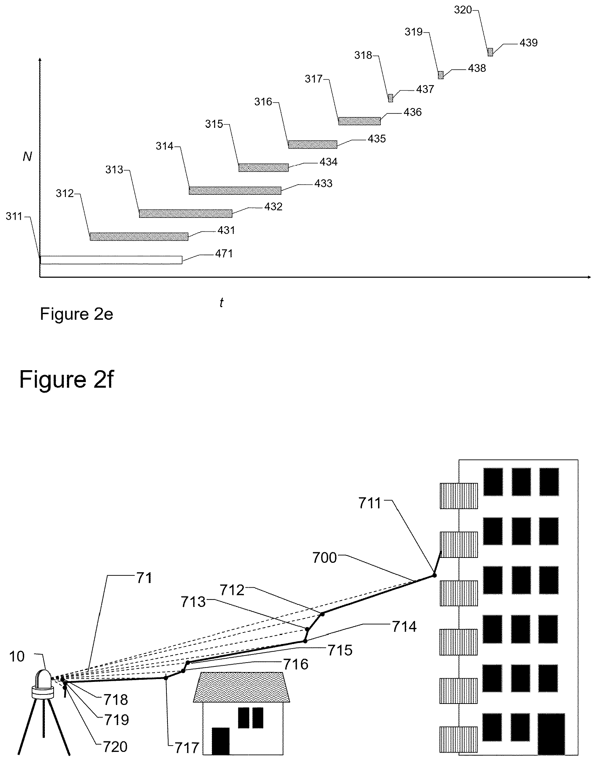

Figure 2a shows an urban environment **1** with a plurality of objects **2,3.** The scanning instrument **10** scans the environment by transmitting first scanning pulses of the first pulse train, in particular laser pulses, along the transmission directions of the first scanning pulses **21.** The transmission direction of the first scanning pulses **21** advances along a scan pattern. The scan pattern to derive the object surface **200** in the depicted embodiment is such that first scanning pulses of the first pulse train are transmitted towards object point **211-220** subsequent to each other. The coordinates of object point **211-220** are derived from the transmission direction **21** and from the distance to the laser scanner **10.** The distance to the laser scanner **10** is derived from the time of flight of the laser pulses, i.e. by assigning transmission and acquisition times to a given first scanning pulse of the first pulse train. The object points **211-220** are farther from the scanning instrument **10** than a first ambiguity distance **210** defined by the first repetition rate. The first ambiguity distance **210** might be the delta time of the first repetition rate times the speed of light. Some object points might be closer to the scanning instrument **10** than the first ambiguity distance **210.** It also goes without saying that the first ambiguity distance **210** defines spheres around the scanning instrument. The lines depicted e.g. in Figure 2a are simplifications due to illustrative purposes.

Due to the characteristics of the urban environment **1,** a distance jump takes place between object points **216** and **217.** The present invention is in no way limited to be applied in urban environments. The present invention might be applied in any environment with a measurement range larger than the first ambiguity distance **210.** Moreover distance jumps might be present in non-urban environments e.g. in wooded or mountainous environments. Distance jump for the present invention means that the distance difference of object points **216** and **217** exceeds the first ambiguity distance **210.** Such non-continuous ambiguity zone changes lead to a situation that the first scanning pulse of the first pulse train reflected from object point **217** will be acquired before the first scanning pulse of the first pulse train reflected from object point **216.**

Figure 2b shows a time of flights for a sequence of scanning pulses reflected from object points, wherein *t* is the time and *N* is an arbitrary number representing the order of the pulses in the sequence. The transmission events **311-320** follow each other with a regular time interval **310** inversely proportional to the repetition rate of the scanning pulses. The time of flights till the acquisition events **331-340** are proportional to the distance of the object points from the scanning instrument. The time of flights depicted in Figure 2b are based on an idealized assumption that the scanning instrument can distinguish between the scanning pulses and correctly assign the acquisition events **331-340** to the transmission events **311-320**. Since the sequence of the acquisition events is **331-335,337,336,338-340** such assignment is unlikely without providing further information regarding the ambiguity zones to the evaluation unit.

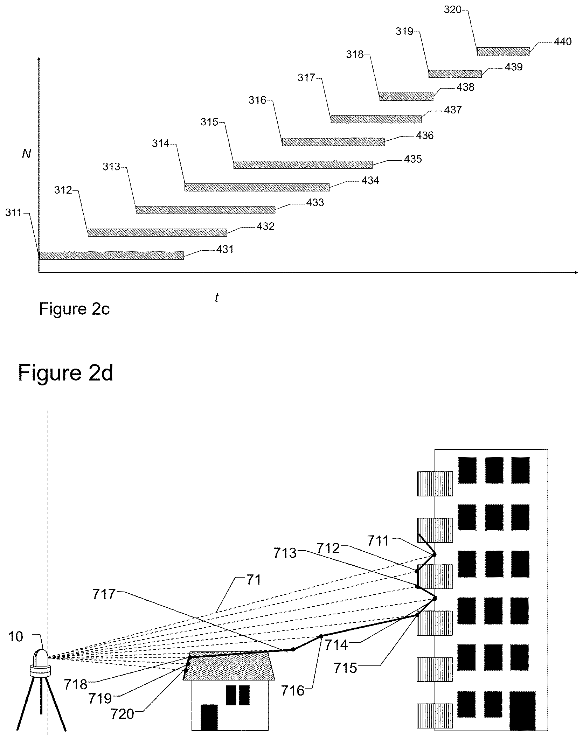

More likely is an assignment shown in Figure 2c, wherein the scanning pulse acquired first is assigned to the first transmitted scanning pulse, i.e. the transmission-acquisition events are assigned to a sequence **431-440,** etc. Such assignment leads to a situation where coordinates of object points are misinterpreted as shown in Figure 2d. The result looks like if scanning pulses emitted in transmission direction **71** would have been reflected from a set of misinterpreted object points **711-720.** The derived object surface **700** is wrong. Without further information, however, even proving the existence of a measurement error is difficult let alone correcting it.

The assignment of Figure 2c and 2d is at least correct for object points far away from the non-continuous ambiguity zone changes. Without further verification, however, not even that could be guaranteed. Figure 2e depicts a situation wherein a transmitted pulse **311** is assigned to an artifact **471,** e.g. an electronic glitch or reflected sunlight. The further transmitted pulses **312-320** are assigned to acquired pulses in the **431-439** sequence. A set of misinterpreted object points **711-720** and a derived object surface **700** is even worse than the one depicted in Figure 2d. However, as in the previous case, correctness of the data cannot be tested.

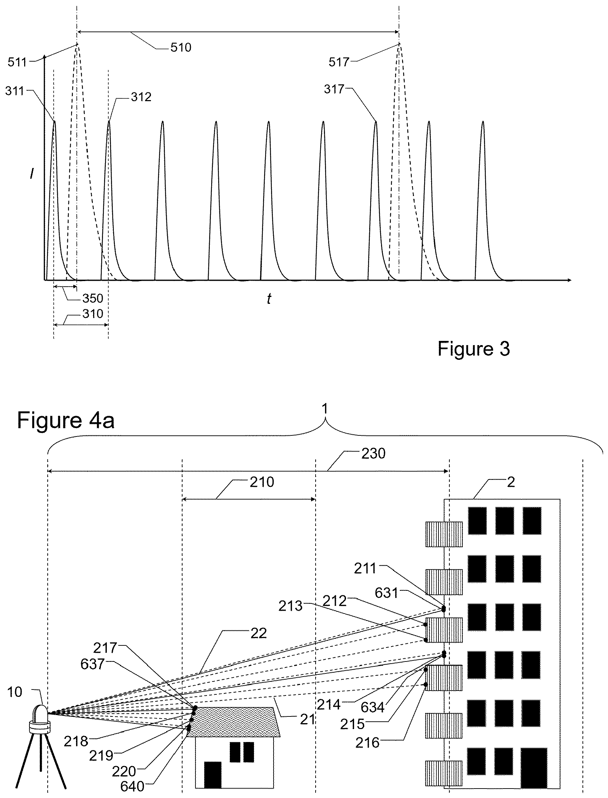

Figure 3 shows a sequence of first **311,312,317** and second scanning pulses **511,517** by depicting the light intensity (I) vs the time (t), wherein the second repetition rate is a unit fraction of the first repletion rate. Transmission events are defined as a peak of respective pulses **311,312,317,511,517.** Another choice, in particular a centroid of a pulse or a separate electronic trigger, might also be applied in the sense of the present invention. While not recognizable on the pulse sequence alone, the choice of the second repetition rate might be motivated by the fact that the second ambiguity distance defined by the second repetition rates is larger than an envisaged measurement range. The depicted 1:6 ratio serves purely descriptive purposes, the present invention might be applicable with any appropriate proper fraction as the ratio of the second and first repetition rates. Instead of repetition rates, time intervals between two first scanning pulses **310** and two second scanning pulses **510** are shown, which are inversely proportional to the respective repetition rates. The interval **350** between the second scanning pulses **511,517** and the preceding first scanning pulses **311,317** is lower than the interval **310** between two first scanning pulses. An echo of double pulses **311/511** or **317/517** can be recognized and unambiguously assigned to transmission events of second scanning pulses. Furthermore, the second scanning pulses **511,517** might be distinguishable from the first scanning pulses **311,312,317** by their pulse characteristic, in particular by amplitude, width or the laser wavelength and/or spectra. If the second ambiguity distance defined by the second repetition rates is larger than the envisaged measurement range the transmission and acquisition of the second scanning pulses **511,512** unambiguously defines the distance of respective object point from the scanning instrument, i.e. they act as anchor points. The preceding first scanning pulses **311,317** might be assigned to the ambiguity zone defined by the anchor points. The subsequent first scanning pulses **318** might also be assigned to the ambiguity zone defined by the by the anchor points. It is clear to the skilled person that instead of the light intensity another parameter, e.g. electric currents of the evaluation unit, might have been equally used.

Figure 4a-4f shows an exemplary assignment based on anchor points. Figure 4a shows an embodiment of a scanning process based on anchor points **631,634,637,640.** The first ambiguity distance **210** defined by the first repetition rate is less than the envisaged measurement range, while the second ambiguity distance **230** defined by the second repetition rate being more than the envisaged measurement range, in particular the distance of the farthest object **2** to be surveyed in the environment **1.** This means that the distance of the anchor points **631,634,637,640** to the scanning instrument **10** can be determined unambiguously. The first scanning pulses of the first pulse train and the second scanning pulses of the second pulse train are transmitted from the scanning instrument **10** along the respective transmission directions of the first **21,** depicted as dashed lines, and second scanning pulses **22,** depicted as solid lines, and reflected from the respective object points **211-220** and anchor points **631,634,637,640.** The second scanning pulses of the second pulse train might have different pulse characteristics than the first scanning pulses of the first pulse train, or might be recognized via pattern recognition. The in Figure 4a depicted embodiment e.g. allows such recognition as double pulses.

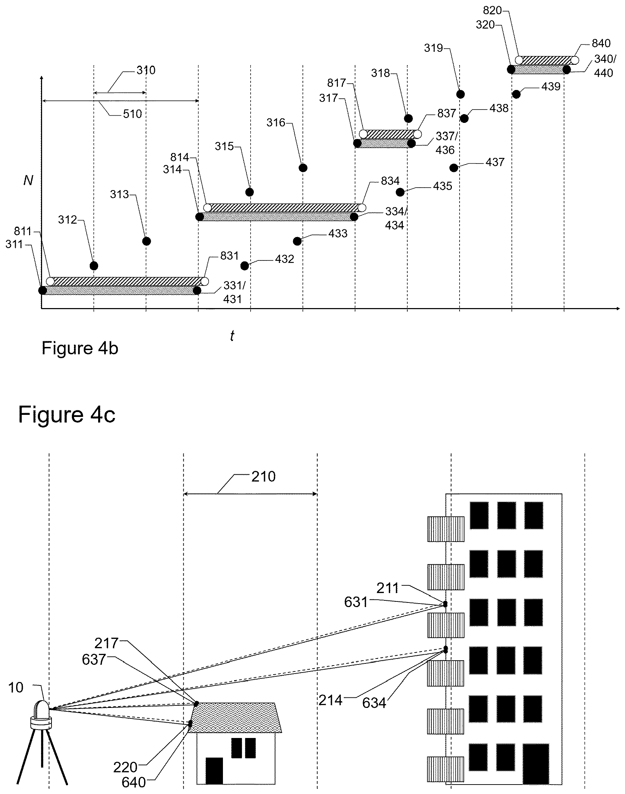

Figure 4b depicts a first step of the assignment of the transmission events **311-320** of the first scanning pulses to the acquisition events **431-440.** The interval between the transmissions of two first scanning pulses **310** is depicted to be one third of the interval between the transmissions of two second scanning pulses **510,** the latter is chosen such that the distance of the anchor points is unambiguously determinable. With alternative wording, no further second scanning pulses are transmitted during the time of flight of a second scanning pulse. Thus the anchor point acquisition events **831,834,837,840** can be unambiguously assigned to the respective transmission events **811,814,817,820.** In the depicted embodiment the anchor points are identified on the basis of pattern recognition. This also means that the precedent first acquisition events **331,334,337,340** can also be unambiguously assigned to the respective first transmission events **311,314,337,340.** Especially interesting is the case of event **337/436,** wherein a pulse overtake could be identified.

Figure 4c depicts the anchor points **631,634,637,640,** and the respective object points **211,214,217,220** assigned unambiguously. In the depicted example subsequent anchor points **631,634** and **637,640** are characterized by a distance from the scanning instrument **10** which fall into the same ambiguity zone defined by the first ambiguity distance **210.** Since for a dense point cloud there is a plurality of anchor points per m² it is unlikely that the object points in between would fall into another ambiguity zone.

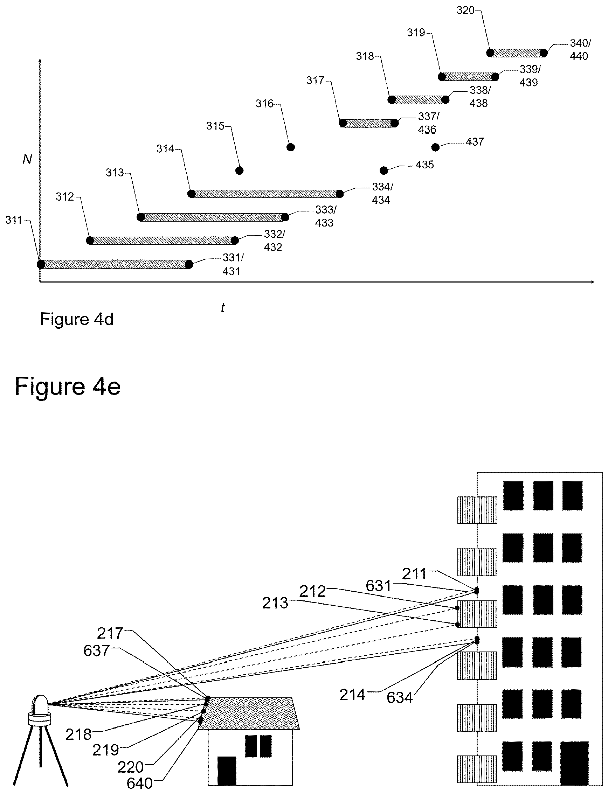

Figure 4d depicts a next step of the assignment wherein the first transmission events **312,313,318,319** are assigned to the respective acquisition events **332/432, 333/433,338/438** and **339/439.** Figure 4e represents a reconstructed point cloud for this stage. Not only the object points **211,214,217,220** preceding the anchor points **631,634,637,640,** but object points **212,213,218,219** are also correctly represented. Figures 4d and 4e illustrate a beneficial property of the claimed invention, as the mentioned object points are assigned on the basis of a simple criterion, without excessive computation. Thus, the computational need is not a function of the total number of the ambiguity zones, but the actually observed ambiguity zone changes.

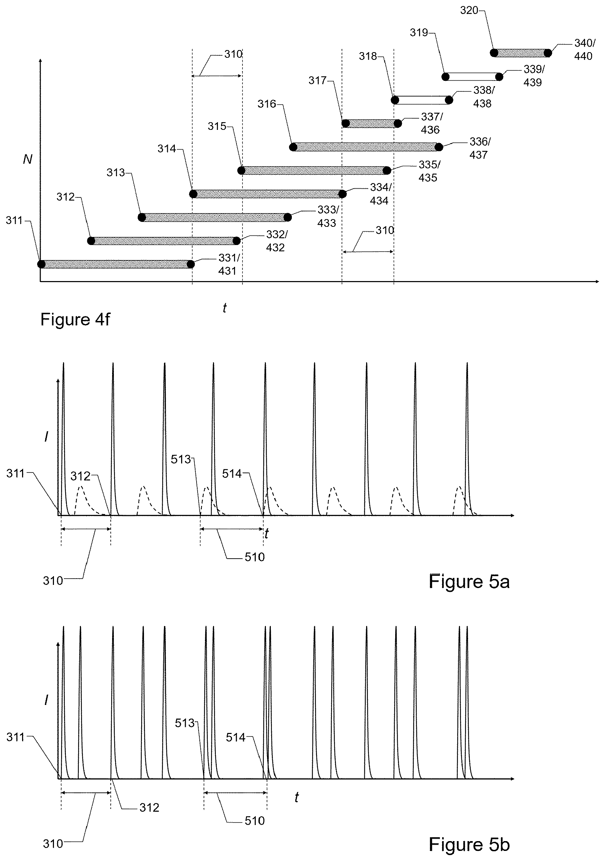

Figure 4f illustrates an assignment of the acquisition events near the observed ambiguity zone change **435,437.** In the depicted embodiment this is carried out on the basis of a pattern recognition, namely that interval between acquisition events **334,435** corresponds reasonably to the interval time intervals **310** between two first scanning pulses. Thus, acquisition event **435** can be assigned to transmission event **315.** The depicted embodiment is an exemplary realization of the assignment near the ambiguity zone change, alternative embodiments are also within the sense of the present invention.

Figures 5a and 5b depict a first pulse train comprising first scanning pulses **311,312** at a first repetition rate and a second pulse train comprising second scanning pulses **513,514** at a second repetition rate depicted as the light intensity (I) as a function of the time (t). The first and second scanning pulses are distinguishable due to pulse characteristics in Figure 5a and undistinguishable in Figure 5b. For brevity and transparency reasons Figure 5a will be discussed in details, however the features are applicable to the case depicted in Figure 5b or any reasonable alternative embodiments.

In the depicted embodiment the interval between two first scanning pulses **310** has a 5:6 ratio to the respective interval between two second scanning pulses **510.** While this exact choice is purely arbitrary, proper fractions with close to unity are advantageous since in those embodiments each first scanning pulse of the first pulse train has one or two nearest second scanning pulses of the second pulse train, which are separated by a time interval less than the time interval **310** between two first scanning pulses of the first pulse train. The transmission events of the second scanning pulses **513,514** are separated by a finite time interval from the first scanning pulses **311,312.** Since the interval between two first scanning pulses **310** is always a proper fraction of the respective interval between two second scanning pulses **510** such time intervals are nonzero throughout the whole scanning process. For pulse trains which are not strictly periodic as depicted in Figure 5a, the jitter should be selected appropriately.

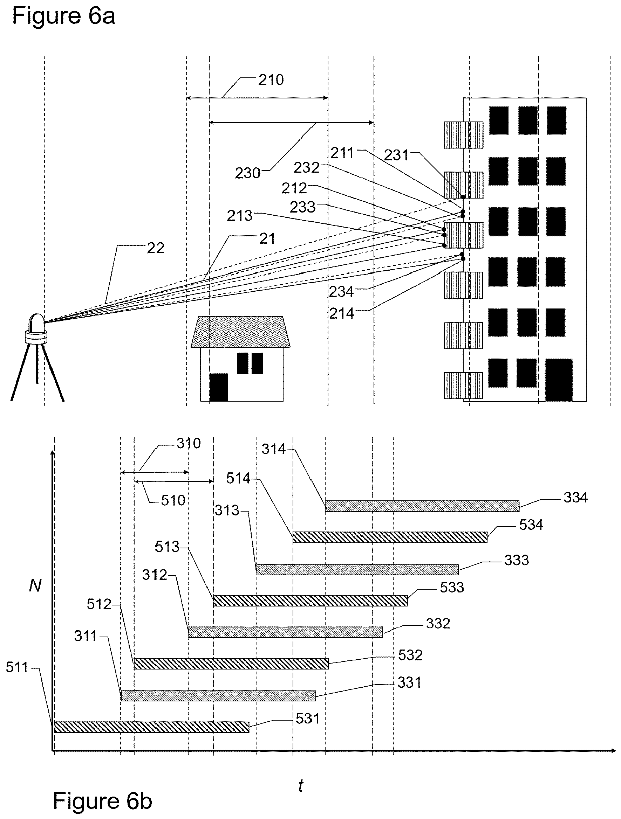

Figures 6a-6d illustrate an assignment of ambiguity zones on the basis of the first and second repetition rates for a portion of the scan where no ambiguity zone change takes place. As was shown in Figure 2e-2f an improper adjustment of the ambiguity zone could happen due to artefacts and has grave consequences. Furthermore, correctly determining the object points reasonably far away from the ambiguity zone changes, wherein reasonably far away might be as low as a few centimeters, with minimal computational resources and in a scalable manner is advantageous for an effective assignment or post-treatment of object points near the ambiguity zone chane.

Figure 6a a shows an embodiment of the scanning process based on two sets of ambiguity zones defined by the first **210** and the second ambiguity distance **230.** The first scanning pulses of the first pulse train are transmitted along the transmission directions of the first scanning pulses **21.** The second scanning pulses of the second pulse train are transmitted along the transmission directions of the second scanning pulses **22.** The object points **211-214** reflecting the first scanning pulses are located in the same ambiguity zone of the first set of amibiguity zones. The object points **231-234** reflecting the second scanning pulses are located in the same ambiguity zone of the second set of amibiguity zones.

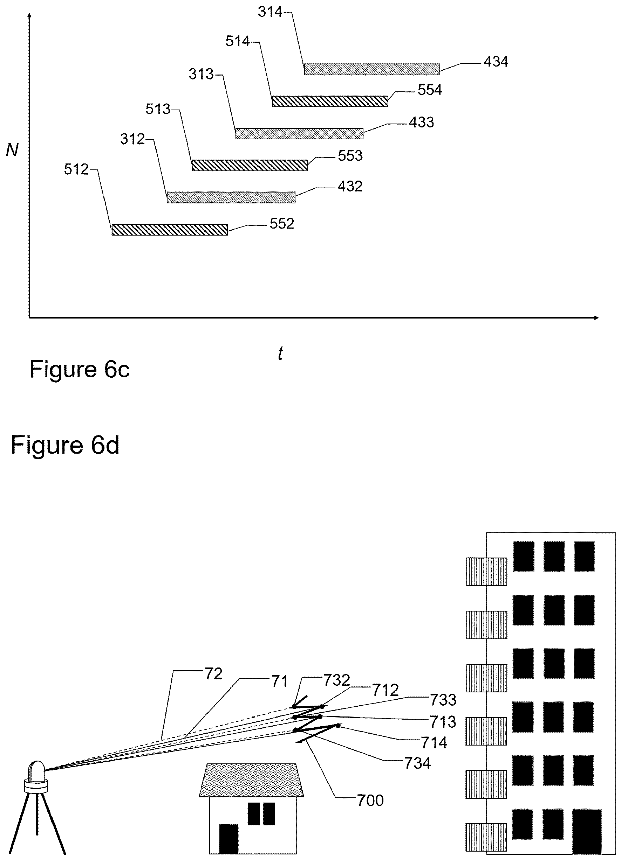

Figure 6b shows a time of flights sequence of first scanning pulses reflected from object points. The transmission events of the first scanning pulses **311-314** follow each other with a regular time interval **310** inversely proportional to the first repetition rate. A time of flights sequence of second scanning pulses reflected from object points is also shown. The transmission events of the second scanning pulses **511-514** follow each other with a regular time interval **510** inversely proportional to the second repetition rate. Since no ambiguity zone change took place, the sequence of the acquisition events **331-334,531-534** corresponds to the transmission events **311-314,511-514.** Figure 6c shows another assignment of the same sequence, wherein the ambiguity zone is incorrectly determined and the incorrect acquisition events **432-434,552-554** are assigned to the transmission events **312-314,512-514.**

Figure 6d shows the resulting point cloud from this assignment. The result looks like if scanning pulses emitted in transmission direction of the first **71** and second scanning pulses **72** would have been reflected from a set of misinterpreted object points **712-714,732-734.** Due to the difference of the first and second ambiguity distances, however object points corresponding to the second pulse train **732-734** have been shifted differently than object points corresponding to the first pulse train **712-714.** The derived object surface **700** immediately shows a well-recognizable zig-zag pattern, or two ghost surfaces, i.e. a clear indication of a mis-assignment of ambiguity zone. Since in the Figure 6a-6d depicted case no ambiguity zone change took place a relatively straightforward computation provides the correct assignment of Figure 6b.

Although the invention is illustrated above, partly with reference to some specific embodiments, it must be understood that numerous modifications and combinations of different features of the embodiments can be made. All of these modifications lie within the scope of the appended claims.

## Claims

1. A terrestrial scanning or profiling multiple time-around (MTA) instrument (10) being configured to provide a point cloud representing an environment (1), the scanning or profiling instrument (10) comprising:
- a light pulse source being configured to continuously generate
∘ a first pulse train comprising first scanning pulses at a first repetition rate, wherein a first ambiguity distance (210) defined by the first repetition rate being less than an envisaged measurement range, and
∘ a second pulse train comprising second scanning pulses at a second repetition rate, wherein the second repetition rate being a proper fraction of the first repetition rate and each second scanning pulse of the second pulse train being separated by finite time intervals (350) from each first scanning pulse of the first pulse train,
- a transmission unit being configured to transmit the first scanning pulses of the first pulse train and the second scanning pulses of the second pulse train along respective transmission directions (21,22), the transmission unit comprising
∘ a beam deflection element (23) for varying the transmission direction (21,22) at least by a rotation around a rotation axis,
∘ angle sensors (26,36) for providing data regarding the respective transmission directions of the transmitted first (21) and second pulses (22),
∘ elements for providing respective transmission times of the transmitted first and second pulses,
- an acquisition unit (81) being configured to acquire first scanning pulses of the first pulse train and second scanning pulses of the second pulse train reflected from object points (211-220) in the environment (1), wherein for each acquisition event an acquisition time being assigned,
- an evaluation unit being configured to
∘ assign to each first and second transmission event the respective transmission directions (21,22) and transmission times,
∘ assign the acquisition events (331-340,431-440,531-534,811,814,817,820) to the respective first (311-320) and second transmission events (511-514,517,520), based on a MTA disambiguation utilizing the first and second repetition rates of the first and second pulse trains,
∘ derive coordinates of the object points (211-220) based on the assignment of the acquisition events (331-340,431-440,531-534,811,814,817,820) to the respective first (311-320) and second transmission events (511-514,517,520),
∘ provide the point cloud representing the environment (1) based on the determined coordinates of the object points (211-220).

2. The terrestrial scanning instrument (10) according to claim 1, wherein
- the scanning instrument (10) being configured to be mounted rotatably on a base unit (30), wherein the base unit (30) configured to provide bearing rotation for the transmission directions of the transmitted first (21) and second scanning pulses (22),
- the transmission unit comprising a rotatable mirror as the beam deflection element (23) providing a tilting angle rotation for the transmission directions of the transmitted first (21) and second scanning pulses (22),
- the scanning instrument (10) being configured to carry out a scanning process by rotating the transmission directions of the transmitted first (21) and second scanning pulses (22) with a constant bearing rotation speed and a constant tilting angle rotation speed.

3. The profiling instrument (10) according to claim 1, wherein the profiling instrument (10) being configured to
- be mounted on a mobile carrier (39), in particular a car, an unmanned vehicle, or a man-portable carrier, in order to guide the profiling instrument (10) along a path (41),
- carry out a scanning process by rotating the transmission directions of the transmitted first (21) and second scanning pulses (22) with a constant rotation speed and by accessing the pose of the mobile carrier (39), in particular wherein the transmission unit comprising a rotatable mirror as the beam deflection element (23) providing a tilting angle rotation for the transmission directions of the transmitted first (21) and second scanning pulses (22).

4. The terrestrial scanning or profiling instrument (10) according to any one of the preceding claims, wherein,
- the light pulse source comprising a modulation unit being configured to generate scanning pulse shift signal,
- at least one of the first pulse train and the second pulse train being non-periodic and the respective transmission events (311-320,511-514,517,520) being shifted by the generated pulse shift signal.

5. The terrestrial scanning or profiling instrument (10) according to any one of the preceding claims, wherein
- a width and/or an energy of the individual pulses in the second pulse train exceeding a width and/or an energy of individual pulses in the first pulse train,
- in particular wherein the first pulse train being a periodic pulse train and the second pulse train being a periodic pulse train.

6. The terrestrial scanning or profiling instrument (10) according to any one of the preceding claims, wherein
- the first pulse train comprising laser pulses with a first laser wavelength,
- the second pulse train comprising laser pulses with a second laser wavelength, wherein the second laser wavelength being different from the first wavelength.

7. The terrestrial scanning or profiling instrument (10) according to any one of the preceding claims wherein
- a second ambiguity distance (230) defined by the second repetition rate being more than the envisaged measurement range,
- the MTA disambiguation comprising,
∘ identifying acquired second scanning pulses of the second pulse train reflected from anchor points (631,634,637,640) in the environment (1),
∘ determining distances of the anchor points (631,634,637,640) to the scanning or profiling instrument (10) based on time of flights of the identified second scanning pulses of the second pulse train,
∘ providing an ambiguity zone assessment for the first scanning pulses of the first pulse train based on the determined distance of the anchor points (631,634,637,640) to the scanning or profiling instrument (10) distance,
∘ assigning the acquired first scanning pulses of the first pulse train reflected from object points (211-220) in the environment (1) to the first transmission events (311-320) based on the ambiguity zone assessment.

8. The terrestrial scanning or profiling instrument (10) according to claim 7, wherein
- the second repetition rate being a unit fraction of the first repetition rate,
- the second scanning pulses of the second pulse train being identified by a pattern recognition algorithm, in particular by identifying double or triple pulses.

9. The terrestrial scanning or profiling instrument (10) according to one of claims 7 to 8 and one of claims 5 to 6 wherein the second scanning pulses being identified by the different wavelengths and/or the different pulse energies and/or the different pulse widths of the first scanning pulses of the first pulse train and the second scanning of the second pulse train.

10. A method of MTA disambiguation for a terrestrial scanning or profiling instrument (10), in particular a terrestrial scanning or profiling instrument (10) according to any one of the claims 1 to 9, comprising the steps of
- continuously transmitting a first pulse train comprising first scanning pulses at a first repetition rate, wherein a first ambiguity distance (210) defined by the first repetition rate being less than an envisaged measurement range,
- continuously transmitting a second pulse train comprising second scanning pulses at a second repetition rate, wherein the second repetition rate being a proper fraction of the first repetition rate and each second scanning pulse of the second pulse train being separated by finite time intervals (350) from each first scanning pulse of the first pulse train,
- assigning to each first and second transmission event respective transmission directions (21,22) and times,
- acquiring the first scanning pulses of the first pulse train and the second scanning pulses of the second pulse train reflected from object points in the environment (1),
- assigning for each acquisition event an acquisition time,
- assigning the acquisition events (331-340,431-440,531-534,811,814,817,820) to the respective first (311-320) and second transmission events (511-514,517,520), based on a MTA disambiguation utilizing the first and second repetition rates of the first and second pulse trains.

11. The method according to claim 10, wherein
- the second scanning pulses of the second pulse train are distinguishable from the first scanning pulses of the first pulse train, in particular by a different laser wavelength, and/or pulse width, and/or pulse energy, and/or pulse shape, and/or pulse pattern,
- the method further comprising
∘ dividing acquisition events (331-340,431-440,531-534,811,814,817,820) into first acquisition events (331-340,431-440) relating to acquiring first scanning pulses of the first pulse train and second acquisition events (531-534,811,814,817,820) relating to acquiring second scanning pulses of the second pulse train,
∘ assigning the first acquisition events (331-340,431-440) to the respective first transmission (311-320) events and the second acquisition events (531-534,811,814,817,820) to the respective second transmission events (511-514,517,520) based on a MTA disambiguation comprising the recognition of the finite time intervals (350) between the first (311-320) and second transmission events (511-514,517,520) in the time intervals of the first (331-340,431-440) and second acquisition events (531-534,811,814,817,820).

12. The method according to one of claims 10 or 11, wherein
- a second ambiguity distance (230) defined by the second repetition rate being more than the envisaged measurement range,
- the MTA disambiguation comprising,
∘ identifying an acquired second scanning pulse of the second pulse train,
∘ determining a distance of an anchor point (631,634,637,640) to the scanning or profiling instrument (10) based on a time of flight of the identified second scanning pulse of the second pulse train,
∘ providing an ambiguity zone assessment for the first scanning pulses of the first pulse train based on the determined anchor point (631,634,637,640) to the scanning or profiling instrument (10) distance.

13. The method according to claim 12, wherein
- the second repetition rate being a unit fraction of the first repetition rate
- an envisaged time interval between the second transmission events from the preceding first transmission events being less than one half, in particular one quarter, of the time interval between two subsequent first transmission events (310),
- the method further comprising the steps of
∘ identifying the second scanning pulses by a pattern recognition algorithm, in particular by identifying the envisaged time interval between two acquisition events (331-340,431-440,531-534,811,814,817,820),
∘ assigning the preceding first scanning pulses of the first pulse train to the ambiguity zone defined by the distance of the anchor point (631,634,637,640) to the scanning or profiling instrument (10).

14. The method according to one of claims 12 or 13, wherein the method further comprising the steps of
- defining for a given first transmission event a respective proximity angular range, wherein the proximity angular range
∘ being compact, in particular conical,
∘ comprising a respective object point relating to the given first transmission event, and
∘ comprising a plurality of anchor points (631,634,637,640),
- providing a distance estimate for each of the one or more first transmission events on the basis of the distances of the anchor points (631,634,637,640) to the scanning instrument (10) within the proximity angular range, in particular wherein a range of the respective distances being smaller than a first ambiguity distance (210), and
- providing an assessment on a plausibility of the MTA assignment on the basis of the ambiguity zone assessment and the distance estimate of the respective first scanning pulse, in particular wherein the distance estimate being out of the assessed ambiguity zone.

15. The method according to any one of the claims 9 to 14, wherein the MTA disambiguation, in particular the ambiguity zone assessment, further based on the density of point cloud object points (211-220) in the point cloud provided by the scanning or profiling instrument (10).

16. A computer program product for a scanning or profiling system, which when executed by a computer, in particular the evaluation unit of a scanning or profiling instrument (10) according to any of the claims 1 to 9 causes the automatic execution of computational steps of the multiple time-around disambiguation method according to any one of the claims 10 to 15.
